# EUROPÄISCHE PATENTSCHRIFT

(11) **EP 1 807 499 B1**
(45) Veröffentlichungstag und Bekanntmachung des Hinweises auf die Patenterteilung: **18.08.2010**
(21) Anmeldenummer: 05805689.6
(22) Anmeldetag: 29.10.2005
(51) Int. Cl.: C12C 7/00, C12C 7/14, C12C 7/20, C12C 13/00

(54) **VERFAHREN ZUM BEHANDELN VON BIERWÜRZE UND VORRICHTUNG ZUM DURCHFÜHREN DES VERFAHRENS**
METHOD FOR TREATING WORT AND DEVICE FOR CARRYING OUT SAID METHOD
PROCEDE POUR TRAITER DU MOUT ET DISPOSITIF POUR METTRE EN OEUVRE LEDIT PROCEDE

(30) Priorität: 05.11.2004 DE 102004053413
(43) Veröffentlichungstag der Anmeldung: 18.07.2007
(73) Patentinhaber: Ziemann Ludwigsburg GmbH, 71636 Ludwigsburg (DE)
(72) Erfinder: BACK, Werner, 85354 Freising (DE); KARSTEN, Wolfgang, 71636 Ludwigsburg (DE); KROTTENHALE, Martin, 84302 Altdorf (DE); MENGER, Hans-Jörg, 68799 Reilingen (DE)
(74) Vertreter: Kastner, Hermann
(86) Internationale Anmeldenummer: PCT/EP2005/011612
(87) Internationale Veröffentlichungsnummer: WO 2006/048213

(56) Entgegenhaltungen:
- AT-B- 137 844
- DE-B- 1 058 958
- DE-C- 665 905
- GB-A- 1 006 166
- US-A- 3 171 746

## Beschreibung

Nach der Beendigung des Maischprozesses wird die Maische in einer Läutervorrichtung geläutert und dabei die Würze mit den darin gelösten Extraktstoffen von den ungelösten Maischebestandteilen getrennt.

Bei diesem Läuterprozess wird zunächst die Vorderwürze abgeläutert und im Anschluss daran der danach noch in den Trebern befindliche Extrakt ausgewaschen. Die Vorderwürze hat den höchsten Extraktgehalt. Der beim Auswaschen gewonnene so genannte Nachguss hat auf Grund der fortschreitenden Auswaschung der Treber einen immer geringer werdenden Extraktgehalt.

Die gesamte Bierwürze wird einer mehrstufigen Behandlung unterzogen. Darunter hat z.B. der Kochprozess mehrere Aufgaben zur erfüllen. Neben dem Eindampfen von Wasser zur Erzielung der gewünschten Würzekonzentration müssen Eiweißstoffe ausgeschieden werden, Hopfenbitterstoffe isomerisiert werden, Enzyme inaktiviert und flüchtige unerwünschte Substanzen ausgetrieben werden. Die mit dieser Behandlung einhergehende Kochung führt außerdem zu einer Sterilisation der Würze.

Bei dieser Vorgehensweise wird die gesamte Bierwürze zwangsläufig einheitlich behandelt, d.h. ohne Berücksichtigung des Umstandes, dass im Verlaufe des Läuterprozesses die Bierwürze mit unterschiedlichem Extraktgehalt und damit mit unterschiedlichen Eigenschaften anfällt.

Um das zu vermeiden, ist in der AT 137 844 B und in der DE 665 905 vorgeschlagen worden, die Vorderwürze und die Nachgusswürze in getrennten Behältnissen aufzufangen und wenigstens in den ersten Behandlungsstufen getrennt zu behandeln. Die Verbesserung der Behandlungsweise hat aber wegen der getrennten Behältnisse einen erhöhten Raumbedarf zur Folge.

Der Erfindung liegt die Aufgabe zugrunde, ein Verfahren anzugeben, bei dem die Läuterwürze entsprechend ihren unterschiedlichen Eigenschaften unterschiedlich behandelt werden kann, ohne dass damit ein erhöhter Raumbedarf gegenüber dem eingangs erwähnten Verfahren einhergeht. Diese Aufgabe wird durch ein Verfahren mit den im Anspruch 1 angegebenen Verfahrensschritten gelöst.

Durch das getrennte Auffangen der Würze in verschiedenen Teilmengen in einem gemeinsamen zusammenhängenden Behältnis mit weitgehender räumlicher Trennung der einzelnen Teilmengen, ist nur ein Behältnis erforderlich, bei dem trotzdem die verschiedenen Teilmengen getrennt voneinander behandelt werden können.

Durch eine Ausgestaltung des Verfahrens nach Anspruch 2 ist es möglich, trotz der während der Läuterzeit unvermeidlichen Ungleichmäßigkeit des Volumenstromes der Bierwürze für die nachfolgenden Behandlungsstufen eine weitgehende Gleichmäßigkeit des Volumenstromes zu erreichen, die vor allem bei einer kontinuierlichen Erhitzung oder Kochung wichtig ist.

Durch eine Ausgestaltung des Verfahrens nach Anspruch 3 ist es möglich, die verschiedenen Zusatzstoffe, wie z.B. Zusätze zur Einstellung des Geschmackes, wie etwa die Hopfenzugabe, oder Zusätze zur Änderung des pH-Wertes, zur Farbveränderung oder zur Erhöhung des Extraktgehaltes und auch Enzymzusätze, sowohl hinsichtlich der Menge wie auch hinsichtlich des Zeitpunktes der Zugabe besser auf die Eigenschaften der einzelnen Teilmengen einzustellen. Außerdem können dadurch auch die Erfordernisse der Zusatzstoffe selbst besser berücksichtigt werden, etwa hinsichtlich des Zeitpunktes der Zugabe in Bezug auf die nachfolgenden Behandlungsstufen.

Durch eine Ausgestaltung des Verfahrens nach Anspruch 4 können die verschiedenen Teilmengen mit unterschiedlicher Temperatur behandelt werden, die den Eigenschaften der betreffenden Teilmenge besser gerecht wird und die gegebenenfalls auch auf zuvor zugegebenen Zusatzstoffe besser eingestellt werden kann, und zwar hinsichtlich der Temperatur und/oder der Kochdauer. Mit der Ausdampfung innerhalb des Erhitzungssystems werden neben Wasser auch unerwünschte flüchtige Bestandteile der Würze ausgeschieden und mit dem Brüden abgeführt. Auch dabei können die verschiedenen Teilmengen unterschiedlich behandelt werden. Durch die dabei unter bestimmten Bedingungen zusätzlich durchgeführte Nachverdampfung wird sichergestellt, dass Dampfblasen nicht in das gemeinsame Behältnisses verschleppt werden.

Bei der Ausgestaltung des Verfahrens nach Anspruch 4 können die einzelnen Teilmengen bereits vor dem Einleiten gekocht werden oder auch erst nach dem Einleiten, d.h. bei späteren Behandlungsstufen und umgekehrt. Dadurch kann der Kochvorgang leichter und besser auf die Erfordernisse der einzelnen Teilmengen eingestellt werden.

Bei einer Ausgestaltung des Verfahrens nach Anspruch 5 wird bei der Mitteltemperatur-Kurzzeit-Erhitzung lediglich eine thermische Stoffumwandlung in kontrolliertem Umfange angestrebt. Dabei wird kein Wasser verdampft. Infolge dessen findet auch die sonst mit der Verdampfung einhergehende Austreibung von flüchtigen Bestandteilen der Würze nicht statt. Durch die dabei unter bestimmten Bedingungen zusätzlich durchgeführte Nachverdampfung wird sichergestellt, dass Dampfblasen nicht in das gemeinsame Behältnisses verschleppt werden.

Bei der Ausgestaltung des Verfahrens nach Anspruch 5 können die verschiedenen Teilmengen in unterschiedlichen Temperaturbereichen vorbehandelt werden. Diese Vorbehandlung kann zweckmäßiger Weise in einem quasi kontinuierlichen Prozess ohne einen Ausdampfprozess durchgeführt werden. Durch Anwendung von Temperaturen von deutlich über 100°C können die Reaktionen beschleunigt werden. Das Fortschreiten der Reaktionen kann durch die Wahl der Heißhaltedauer für jede Teilmenge getrennt gesteuert werden. Durch das anschließende Abkühlen der einzelnen Teilmenge wird deren Wärmebelastung auf ein erträgliches Maß vermindert. Generell kann durch diese Kurzzeit-erhitzung die Intensität des sich später anschließenden eigentlichen Kochprozesses für die einzelnen Teilmengen verringert werden und dadurch ihre Wärmebelastung niedrig gehalten werden.

Dadurch, dass bei einer Ausgestaltung des Verfahrens nach Anspruch 6 für eine der Behandlungsstufen der Bierwürze von einer Teilmengen jeweils nur ein sehr geringer Volumenanteil umgewälzt wird, tritt nur eine sehr geringe Volumenverschiebung derjenigen Teilmengen ein, die sich oberhalb der behandelten Teilmenge befinden. Außerdem können die Abmessungen der für die Behandlung eingesetzten Gerätschaften und das zugehörige Leitungssystem auf den sehr kleinen Volumenanteil abgestimmt werden.

Bei einer Ausgestaltung des Verfahrens nach Anspruch 7 kann der einzelnen Teilmenge ein bestimmter Wasseranteil in einem externen Kochvorgang entzogen werden. Wegen der verhältnismäßig geringen Wärmebelastung kann dieser Kochvorgang über eine längere Zeitspanne durchgeführt werden.

Bei einer Ausgestaltung des Verfahrens nach Anspruch 8 wird dem umgewälzten Volumenanteil ebenfalls ein bestimmter Wasseranteil in einem externen Ausdampfvorgang entzogen. Durch die Vakuumverdampfung erniedrigt sich die Temperatur der Würze, was deren Wärmebelastung verringert.

Bei einer Ausgestaltung des Verfahrens nach Anspruch 9 wird der einzelnen Teilmenge der betreffende Wasseranteil auf besonders schonende Weise entzogen.

Wenn das Verfahren gemäß Anspruch 7 nach Anspruch 10 weitergebildet wird und der Volumenanteil zusätzlich einer Nachverdampfung unterzogen wird, bei der der Druck praktisch unterhalb des Druckes liegt, der an dem Ort der Rückführung des Volumenanteils herrscht, wird vermieden, dass in dem in den Teilraum zurückgeführten Volumenanteil Dampfblasen auftreten und diese zu einer Verwirbelung und Vermischung der übereinander angeordneten Teilmengen führt.

Dadurch, dass bei einer Ausgestaltung des Verfahrens nach Anspruch 11 eine Teilmenge vollständig abgezogen wird, kann diese Teilmenge den weiteren Behandlungsstufen bereits zugeführt werden, noch ehe die nachfolgenden Teilmengen im Behältnis vollständig aufgefangen worden sind. Dadurch kann die Behandlungsdauer für das Gesamtvolumen der Bierwürze erheblich verkürzt werden.

Wenn das Verfahren gemäß Anspruch 11 nach Anspruch 12 weitergebildet wird, wird durch diese Verfahrensführung erreicht, dass die betreffende Behandlungsstufe nicht vor dem Einleiten der Teilmenge in das Behältnis durchgeführt werden muss, sondern danach durchgeführt werden kann. Dadurch hat man eine größere Behandlungsvielfalt für die verschiedenen Teilmengen.

Bei einer Ausgestaltung des Verfahrens nach Anspruch 13 wird erreicht, dass unerwünschte thermische Prozesse soweit wie möglich verlangsamt werden und andererseits die Trubabscheidung nicht zu sehr beeinträchtigt wird.

Bei einer Ausgestaltung des Verfahrens nach Anspruch 15, 16 oder 17 kann vor allem freies DMS (Dimethylsulfat) ausgedampft werden, das bei den Kochvorgängen oder bei einer Heißhaltung bei höherer Temperatur sich nachgebildet hat.

Durch eine Ausgestaltung des Verfahrens bei Anspruch 18 lassen sich die unterschiedlichen Eigenschaften der verschiedenen Teilmengen optimal nutzen.

Durch eine Ausgestaltung des Verfahrens nach Anspruch 19 werden vor allem flüchtige Bestandteile der Bierwürze bei verhältnismäßig geringer Wärmebelastung der Bierwürze zusätzlich ausgedunstet.

Der Erfindung liegt auch die Aufgabe zugrunde, eine Vorrichtung zum Durchführen der Verfahren anzugeben. Diese Aufgabe wird durch eine Vorrichtung nach Anspruch 20 gelöst.

Dadurch, dass ein Behältnis vorhanden ist, das wenigstens einen Zwischenboden aufweist, durch den der Innenraum des Behältnisses in eine entsprechende Anzahl Teilräume unterteilt wird, ist es möglich, die Gesamtmenge der Würze in einer entsprechenden Anzahl Teilmengen aufzufangen und jede dieser Teilmengen in je einem Teilraum des Behältnisse einzuleiten und darin außerhalb der Behandlung gemäß Behandlungsplan zu verwahren. Das ermöglicht eine optimale Behandlung der Teilmengen gemäß ihren Eigenschaften.

Bei dieser Ausgestaltung werden die einzelnen Teilmengen weitgehend voneinander getrennt gehalten, wobei durch die Durchtrittsöffnung im Zwischenboden verhindert wird, dass sich in einem der Teilräume ein Unterdruck oder ein Überdruck ausbildet, wenn die betreffende Teilmenge ihr Volumen ändert.

Bei einer Ausgestaltung nach Anspruch 23 wird eine weitgehende Trennung der Teilmengen erreicht, wobei durch die Verwendung zweier Platten mit gegeneinander versetzt angeordneten Durchtrittsöffnungen eine Vermischung der einander benachbarten Teilmengen auf ein Minimum verringert ist.

Durch eine Ausgestaltung der Vorrichtung nach Anspruch 24 wird erreicht, dass beim Ein- oder Ausströmen der Teilmengen die Verwirbelung der betreffenden Teilmenge möglichst gering ist. Das gilt vor allem bei einer Weiterbildung nach Anspruch 25 und/oder 26. Wenn bei einem Teil der Austritts- bzw. Eintrittsöffnungen deren Achse parallel zu den Mantellinien eines Kegels ausgerichtet ist, werden Toträume innerhalb der betreffenden Teilräume vermieden. Das gilt besonders bei einer Weiterbildung nach Anspruch 27.

Bei einer Ausgestaltung der Vorrichtung nach Anspruch 28 oder 29 lassen sich die Verteilervorrichtung und die Sammelvorrichtung einfach und leicht herstellen.

Bei einer Ausgestaltung der Vorrichtung nach Anspruch 30 wird sowohl bei den Austrittsrohren wie auch bei den Sammelrohren eine unerwünschte Verwirbelung der einströmenden bzw. ausströmenden Teilmenge vermieden.

Durch eine Ausgestaltung der Vorrichtung nach Anspruch 31 wird die Gefahr der Bildung von Toträumen beseitigt.

Durch eine Weiterbildung der Vorrichtung nach Anspruch 33 wird vermieden, dass der Würzestrom aus den Verteilerrohren hinaus und/oder in die Sammelrohre hinein in dem zugeordneten Teilraum eine zu starke Strömungskomponente in axialer Richtung hervorruft.

Mit einer Ausgestaltung der Vorrichtung nach Anspruch 34 kann man den Würzeteilströmen vor allem bei ihrem Eintritt in den Teilraum eine bestimmte Richtung geben, um die Durchmischung der betreffenden Teilmenge zu verbessern. Mit der Weiterbildung der Vorrichtung nach Anspruch 35 kann man in dem Teilraum eine zusätzliche Rotationsbewegung der Teilmenge erzeugen und damit die axiale Strömung der Teilmenge stabilisieren.

Im Folgenden wird die Erfindung anhand eines Ausführungsbeispiels des Verfahrens und der darauf abgestimmten Vorrichtung näher erläutert.

Es zeigen:
- Fig. 1: ein Blockschaltbild für eine Vorrichtung zum Behandeln von Bierwürze mit einem gemeinsamen Behältnis mit voneinander getrennten Teilräu- men;
- Fig. 2: schematische Darstellungen der Vorrichtungs-
- und 3: komponenten für ein Ausführungsbeispiel des Verfahrens gemäß Fig. 1;
- Fig. 4: einen schematisch dargestellten Vertikalschnitt des Behältnisses der Vorrichtung gemäß Fig. 1;
- Fig. 5: einen vergrößert dargestellten Ausschnitt des Behältnisses nach Fig. 4 mit einer ersten Abwandlung des Zwischenbodens und einer Verteilervorrichtung oder Sammelvorrichtung;
- Fig. 6: eine Draufsicht zur Fig. 5;
- Fig. 7: einen vergrößert dargestellten Ausschnitt ähn- lich Fig. 5 mit zwei Zwischenböden und je zwei Verteilervorrichtungen oder Sammelvorrich tungen;
- Fig. 8: einen vergrößert dargestellten Ausschnitt des Behältnisses nach Fig. 4 mit einer zweiten Abwandlung des Zwischenbodens und einer Vertei- lervorrichtung oder Sammelvorrichtung:
- Fig. 9: eine Draufsicht zu Fig. 8;
- Fig. 10: einen vergrößert dargestellten Ausschnitt ähn- lich Fig. 8 mit zwei Zwischenböden und je zwei Verteilervorrichtungen oder Sammelvorrich- tungen;
- Fig. 11: einen vergrößert dargestellten Ausschnitt der Fig. 8 mit Entlüftungsöffnung und Ventil- teller;
- Fig. 12: einen vergrößert dargestellten Ausschnitt der Fig. 8 mit Austrittsrohr und Prallplatte;
- Fig. 13: eine Untersicht zu Fig. 12.

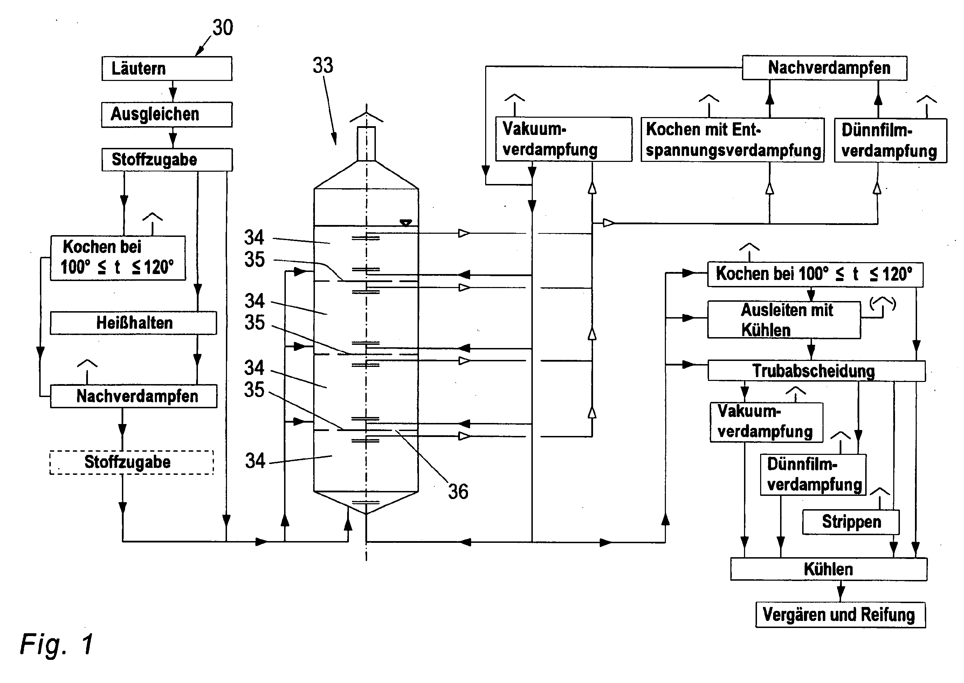

In Fig. 1 ist das erfindungsgemäße Verfahren zur Behandlung von Bierwürze in Form eines Blockschaltbildes schematisch dargestellt.

Bei dem Verfahren gemäß Fig. 1 wird die Bierwürze unmittelbar nach dem Läutern in der Läutervorrichtung 30 in verschiedene Teilmengen getrennt voneinander erfasst und in einem gemeinsamen zusammenhängenden Behältnis 33 in turmartig übereinander angeordneten Teilräumen 34 des Behältnisses 33 aufgefangen. Diese Teilräume sind mittels Zwischenböden 35 mit Durchtrittsöffnungen 36 voneinander weitgehend abgetrennt.

Aus Fig. 1 lassen sich mehrere Untervarianten des Verfahrens für die Behandlung der einzelnen Teilmengen ableiten, in denen die ausgewählten Behandlungsstufen zusammen einen bestimmten Behandlungsplan für die betreffende Teilmenge ergeben. Diese Behandlungspläne können für jede Teilmenge unterschiedlich sein. Die unterschiedlichen Eigenschaften der einzelnen Teilmengen können sehr gut berücksichtigt werden und eine auf diese Eigenschaften abgestimmte optimale Behandlung der Teilmengen erreicht werden.

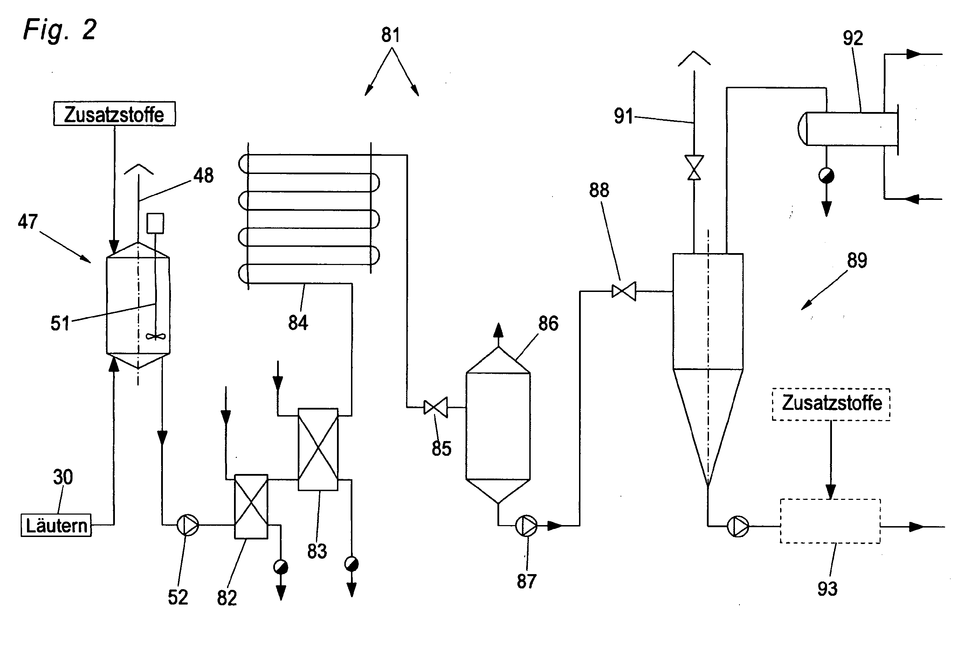

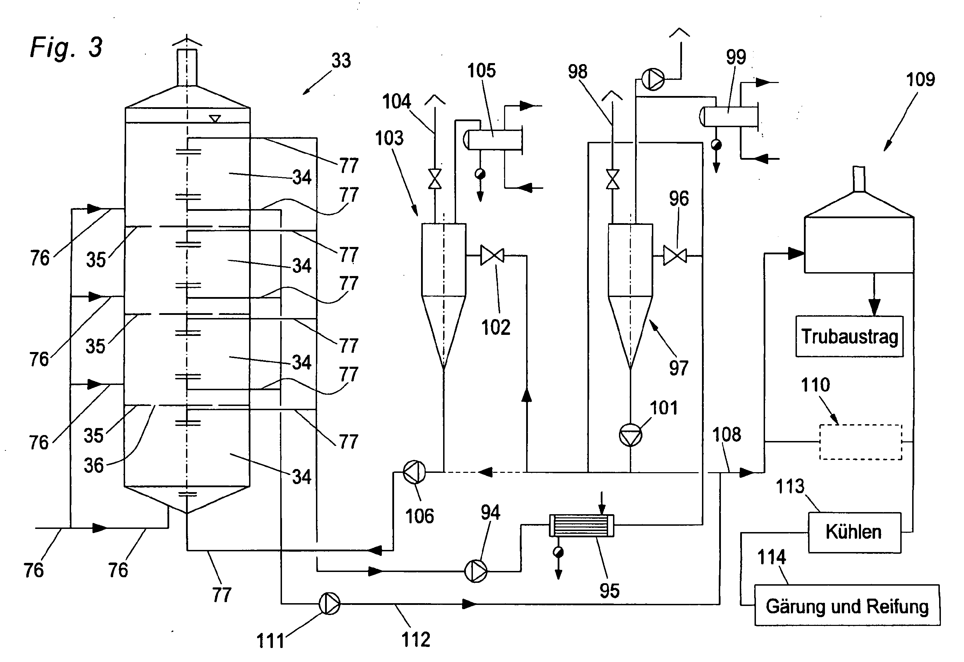

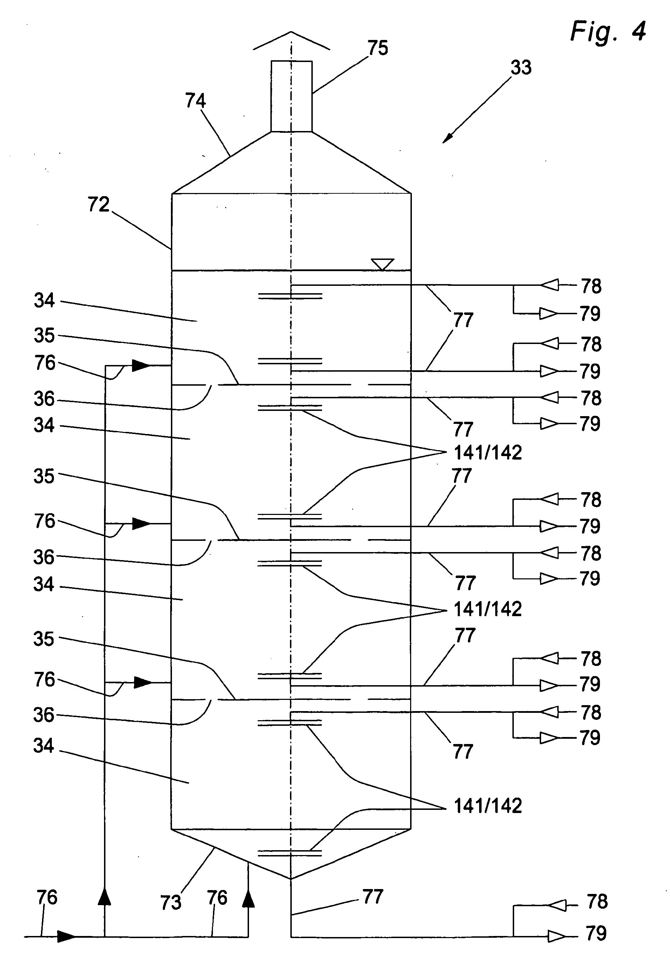

Die zur Durchführung der Verfahren verwendeten Vorrichtungsteile sowie die Verbindungsleitungen zwischen diesen Vorrichtungsteilen werden im Folgenden anhand mehrerer Ausführungsbeispiele der Vorrichtung erläutert. Das geschieht für das Verfahren gemäß Fig. 1 anhand einer Untervariante gemäß Fig. 2 und Fig. 3, wobei auch Fig. 4 einbezogen wird. Bei diesen Erläuterungen wird auch auf andere Untervarianten hingewiesen, die sich aus Fig. 1 ableiten lassen.

Die beim Maischeprozess entstehende Maische wird in einer Läutervorrichtung 30 geläutert und dabei die Würze mit den darin gelösten Extraktstoffen von den ungelösten Maischebestandteilen getrennt.

Die bei dem Ausführungsbeispiel nach Fig. 1 aus einer Läutervorrichtung 30 kommende Würze wird in einzelne später getrennt voneinander behandelte Teilmengen aufgeteilt. Jede dieser Teilmengen wird in einem gemeinsamen Behältnis 33 weitgehend getrennt voneinander aufgefangen.

Das Behältnis 33 (Fig. 4) wird durch eine zylindrische Umfangswand 72, durch einen Boden 73 und durch einen Deckel 74 gebildet. Im Deckel 74 ist eine Be- und Entlüftungsöffnung 75 vorhanden, die bei Bedarf mittels einer nicht dargestellten Absperrvorrichtung abgesperrt werden kann.

In dem Behältnis 33 sind drei Zwischenböden 35 vorhanden, durch die der Innenraum des Behältnisses 33 in vier Teilräume 34 unterteilt wird. Am Behältnis 33 sind für jeden der Teilräume 34 Zuflussleitungen 76 zum Einlagern der Teilengen und für die Behandlung der Teilengen Anschlussleitungen 77 angeschlossen, die mal als Zuflussleitung 78 und mal als Abflussleitung 79 dienen, wie es durch die Richtungspfeile versinnbildlicht wird.

Vor dem Einleiten der verschiedenen Teilmengen der Würze in die Teilräume 34 des Behältnisses 33 werden diese Teilmengen in ein Ausgleichsgefäß 47 eingeleitet, dessen Fassungsvermögen kleiner als das Gesamtvolumen der aus der Läutervorrichtung 30 kommenden Würze ist. Dieses Ausgleichsgefäß 47 hat eine freie Oberfläche und eine Be- und Entlüftungsöffnung 48. Durch das Ausgleichsgefäß 47 werden die Schwankungen des aus der Läutervorrichtung 30 häufig ungleichmäßig austretenden Volumenstromes so ausgeglichen, dass den nachfolgenden Behandlungsstufen ein möglichst gleichmäßiger Volumenstrom zur Verfügung steht.

In dem Ausgleichsgefäß 47 werden der durchfließenden Würze Zusatzstoffe hinzugefügt, wie zum Beispiel Zusätze zur Einstellung des Geschmackes, wie etwa die Hopfenzugabe, oder Zusätze zur Änderung des pH-Wertes, zur Erhöhung des Extraktgehaltes oder auch Enzymzusätze. Die zugeführten Zusatzstoffe werden durch ein Rührwerk 51 in der Würze gleichmäßig verteilt.

Die verschiedenen später in den Teilräumen 34 getrennt voneinander aufgefangenen Teilmengen werden nacheinander einem Kochvorgang unterzogen. Dazu wird die betreffende Teilmenge mittels der Pumpe 52 aus dem Ausgleichsgefäß 47 abgezogen und durch eine Kochvorrichtung 81 hindurchgeleitet.

Die Teilmenge wird in einem ersten Wärmetauscher 82 auf etwa 95°C erwärmt und in einem zweiten Wärmetauscher 83 auf eine Siede- und Heißhaltetemperatur von etwa 100° bis 119°C erwärmt und in eine Heißhaltevorrichtung 84 eingeleitet. Nach Ablauf der gewünschten Zeitspanne für die Heißhaltung der Würze wird die Teilmenge aus der Heißhaltevorrichtung 84 ausgeleitet und durch ein Druckminderventil 85 in eine Entspannungsgefäß 86 eingeleitet. Durch den Druckabfall wird in dem Entspannungsgefäß 86 ein Teil des Wassers der Teilmenge zusammen mit flüchtigen Bestandteilen der Würze ausgedampft. Die Wärmeenergie des Brüdens wird dazu benutzt, in dem ersten Wärmetauscher 82 die nächste einströmende Teilmenge zu erwärmen. Die so vorgewärmte Teilmenge wird in dem zweiten Wärmetauscher 83 mittels Frischdampf auf die Siede- und Heißhaltetemperatur aufgeheizt.

In Folge der Entspannung der Teilmenge in dem Entspannungsgefäß 84 kühlt sich die Teilmenge ab, und zwar auf annähernd Siedetemperatur bei Atmosphärendruck.

Die Teilmenge wird aus dem Entspannungsgefäß 86 mittels einer Pumpe 87 abgezogen und über ein Druckminderventil 88 in ein zusätzliches Entspannungsgefäß 89 eingeleitet. Dadurch werden in der Teilmenge verbliebene Reste der Dampfblasen abgeschieden. Das geschieht entweder über eine wahlweise absperrbare Auslassleitung 91 durch Abgabe in die Atmosphäre oder durch Kondensieren in einem Brüdenkondensator 92. Diese Nachverdampfung wird bei einem Druck durchgeführt, der höchstens gleich dem Druck an demjenigen Ort ist, zu dem die Teilmenge in dem Behältnis 33 hingeleitet wird.

Zusätzlich zur Zuführung von Zusatzstoffen in dem Ausgleichsgefäß 47, oder stattdessen, kann bei Bedarf die Teilmenge durch eine Zuführvorrichtung 93 hindurch geleitet werden und dabei Zusatzstoffe hinzugefügt werden.

Die verschiedenen Teilmengen werden nacheinander über die Zuflußleitungen 76 in den zugeordneten Teilraum 34 des gemeinsamen Behältnisses 33 eingeleitet und darin gelagert.

Von den einzelnen Teilmengen in den verschiedenen Teilräumen 34 des Behältnisses 33 wird für eine Behandlungsstufe der Bierwürze nur ein sehr geringer Volumenanteil abgezogen und nach der Behandlung wieder in den zugeordneten Teilraum zurückgeleitet, um größere Verschiebungen der Teilmengen in den Teilräumen des Behältnisses 33 zu vermeiden. Bei der Auswahl des Ortes für das Abziehen und für das Zurückleiten des Volumenanteils wird die bei der Behandlung des Volumenanteils auftretende Änderung der Dichte berücksichtigt. Je nach den Gegebenheiten wird der Volumenanteil im oberen Bereich oder im unteren Bereich des zugeordneten Teilraumes abgezogen und in dem entgegen gesetzten Bereich des Teilraumes wieder zurückgeleitet, um unerwünschte Durchmischungen der Teilmenge zu vermeiden. Daher wird im Allgemeinen bei einer Behandlung mit Verdampfung oben abgezogen und unten zurückgeleitet und bei einer reinen Erhitzung ohne nennenswerte Verdampfung unten abgezogen und oben zurückgeleitet. Um das zu veranschaulichen, sind in Fig. 1 für die Untervarianten der Behandlung der Volumenanteile mit Verdampfung die Richtungspfeile der Würze mit geringerer Dichte hohl und diejenigen der Würze mit höherer Dichte ausgefüllt dargestellt

Die einzelnen Teilmengen werden entsprechend ihrem Behandlungsplan einzelnen Behandlungsstufen unterzogen.

Bei dem Ausführungsbeispiel gemäß Fig. 2 und Fig. 3 werden sie zunächst einem Kochvorgang mit Entspannungsverdampfung und zusätzlich einer Nachverdampfung unterzogen. Dazu werden die umgewälzten Volumenanteile der betreffenden Teilmenge mittels einer Pumpe 94 durch eine externe Außenkochvorrichtung in Form eines Wärmetauschers 95 hindurchgeleitet. Die Würzeaustrittstemperatur am Wärmetauscher 95 kann durch ein Druckminderventil 96 beispielsweise auf 105°C eingestellt werden. In einem nachgeschalteten Entspannungsgefäß 97 wird ein Teil des Wassers zusammen mit flüchtigen Bestandteilen der Würze ausgedampft. Im Entspannungsgefäß 97 herrscht zumindest annähernd atmosphärischer Druck. Die dampfförmige Phase wird entweder durch eine Auslassleitung 98 in die Atmosphäre abgeleitet oder in einem Brüdenkondensator 99 kondensiert.

Aus dem Entspannungsgefäß 97 wird der Volumenanteil mittels einer Pumpe 101 durch ein Druckminderventil 102 in ein weiteres Entspannungsgefäß 103 eingeleitet. Darin wird die Nachverdampfung bei einem Druck durchgeführt, der höchstens gleich dem Druck an demjenigen Ort im Behältnis 33 ist, zu dem der Volumenanteil zurückgeleitet wird. Dadurch wird vermieden, dass Dampfblasen und gegebenenfalls auch Gasblasen in das Behältnis 33 hinein verschleppt werden und darin von der Einleitungsstelle aus, durch die darüber befindlichen Teilmengen hindurch, aufsteigen und in diesen Teilmengen unerwünschte Verwirbelungen und Durchmischungen hervorrufen. Die dampf- oder gasförmige Phase wird entweder durch eine Auslassleitung 104 in die Atmosphäre abgeleitet oder in einem Brüdenkondensator 105 kondensiert.

Im Anschluss an das Entspannungsgefäß 103 wird der Volumenanteil mittels einer Pumpe 106 in den zugeordneten Teilraum des Behältnisses 33 zurückbefördert. Dabei wird mittels einer Leitungsweiche 107 diejenige Anschlussleitung des betreffenden Teilraumes als Zuflussleitung ausgewählt, bei der die weiter oben genannten Bedingungen für das Abziehen und Zurückleiten von Volumenanteilen erfüllt sind.

Anstelle des oben geschilderten Kochvorganges in dem Wärmetauscher 95 mit Entspannungsverdampfung kann man die Volumenanteile auch einem externen Kochvorgang in Form einer Dünnfilmverdampfung unterziehen, bei der der aus dem Volumenanteil austretende Dampf aus dem Verdampfungsgefäß abgeleitet wird.

Soweit einer der zuvor geschilderten Kochvorgänge durchgeführt wird, kann nach seiner Beendigung der Volumenanteil einer externen Vakuumverdampfung unterzogen und dabei der aus dem Volumenanteil austretende Dampf in dem Vakuumverdampfungsgefäß abgeleitet werden. Bei dieser Vakuumverdampfung wird die Temperatur des Volumenanteils deutlich erniedrigt, wobei die Abkühlung durch die Vakuumverdampfung sich unmittelbar an den vorangehenden Kochvorgang anschließt. Gleichzeitig wird durch die damit einhergehende Erniedrigung der Temperatur die Dichte der Würze erhöht. Dadurch wird die Gefahr einer Vermischung mit Volumenanteilen geringerer Dichte zusätzlich vermindert.

Anstelle des Umwälzens der kleinen Volumenanteile einer Teilmenge kann im Behandlungsplan auch vorgesehen sein, dass eine einzelne Teilmenge, oder mehrere Teilmengen gemeinsam, vollständig aus dem Behältnis 33 abgezogen und einer weiteren Behandlungsstufe zugeleitet wird, von der aus sie nicht wieder in das Behältnis 33 zurückgeleitet wird. Bei der vorliegenden Untervariante wird die betreffende Teilmenge mittels einer Pumpe 111 über eine Leitung 112 einem Whirlpool 109 zugeleitet.

Diese Vorgehensweise gilt auch dann, wenn die Behandlung der Volumenanteile einer Teilmenge in der weiter oben geschilderten Weise beendet ist und ein weiteres Einlagern im Behältnis 33 nicht mehr erforderlich ist. In diesem Falle wird die durch den Außenkocher 95 und das Entspannungsgefäß 97 mit ihren Volumenanteilen umgewälzte Teilmenge nicht in den zugeordneten Teilraum zurückgeführt sondern nach und nach über die Abflussleitung 108 dem Whirlpool 109 zugeleitet.

In dem Whirlpool 109 wird die eingeleitete Teilmenge gepoolt, das heißt in der üblichen Weise in dem Whirlpoolgefäß mit ebenem Boden durch tangentiales Einströmen die Teilwürze in Rotation versetzt, so dass sich nach und nach der Heißtrub als Trubkegel auf dem Boden des Whirlpoolgefäßes ablagert. Nach dem Abziehen der Teilmenge der Bierwürze wird der zurückgebliebene Trubkuchen aus dem Whirlpoolgefäß entfernt.

In dem Falle, dass die zu behandelnde Teilmenge für eine Trubabscheidung in einem Whirlpool nicht geeignet ist oder aus anderen Gründen eine andere Art der Trubabscheidung vorgesehen wird, kann der Heißtrub aus der Teilmenge auch in einer anderen externen Trubabscheidevorrichtung 110, beispielsweise in einem Filter oder in einem Separator, abgeschieden werden.

Nachdem bei einer Teilmenge der Heißtrub auf die eine oder andere Weise abgeschieden ist, kann die Teilmenge einer Vakuumverdampfung, einer Dünnfilmverdampfung oder einem sogenannten Strippvorgang unterzogen werden und dadurch ein gewisser Wasseranteil zusammen mit flüchtigen Würzebestandteilen ausgedampft werden. Bei einer Vakuumverdampfung tritt zusätzlich eine Verminderung der Temperatur ein, was die Wärmebelastung der Würze vermindert. Danach wird die Teilmenge mittels einer Kühlvorrichtung 113 auf Anstelltemperatur gekühlt und anschließend in einem Gärbehältnis 114 vergoren und gereift.

Spätestens nach Abschluss der Behandlungsstufen mit erhöhter Temperatur und gegebenenfalls auch erhöhtem Druck und vor allem nach dem Abscheiden des Heißtrubes kann im Behandlungsplan auch vorgesehen sein, dass einzelne der Teilmengen oder auch alle Teilmengen eines Sudes wieder zusammengeführt werden, um gruppenweise oder insgesamt gekühlt und vergoren und gereift zu werden.

Im Folgenden werden anhand Fig. 4 bis Fig. 13 einige Baugruppen und Bauteile des Behältnisses 33 für das Durchführen des Verfahrens gemäß Fig. 1 näher erläutert.

In Fig. 4 sind die Zwischenböden 35 als einfache Platten dargestellt. Sie sind mit der Umfangswand 72 des kreiszylindrischen Behältnisses 33 dicht verbunden. Die Durchtrittsöffnungen 36 in den Zwischenböden 35 sind größer dargestellt, als sie in Wirklichkeit sind. Sie dienen hauptsächlich dem Druckausgleich zwischen je zwei einander benachbarten Teilräumen 34 und ermöglichen auch den Übertritt geringer Volumenanteile der in den Teilräumen 34 eingelagerten Teilmengen der Würze, wenn im Zuge einer Behandlungsstufe in einer Teilmenge etwa durch Ausdampfen von Wasseranteilen oder in Folge einer Temperaturänderung eine Volumenänderung der Teilmenge eintritt.

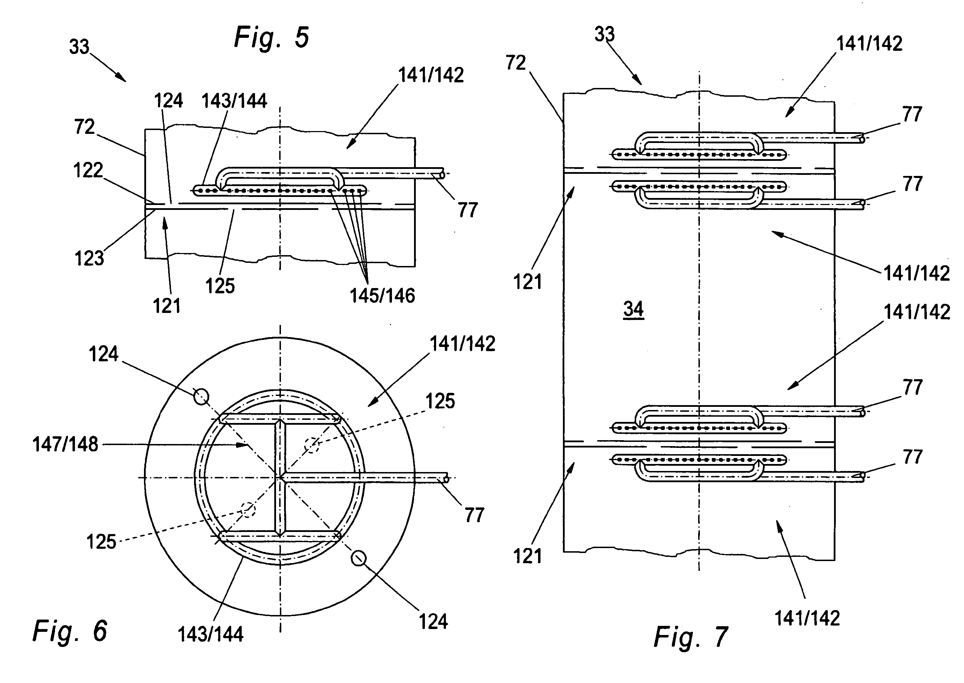

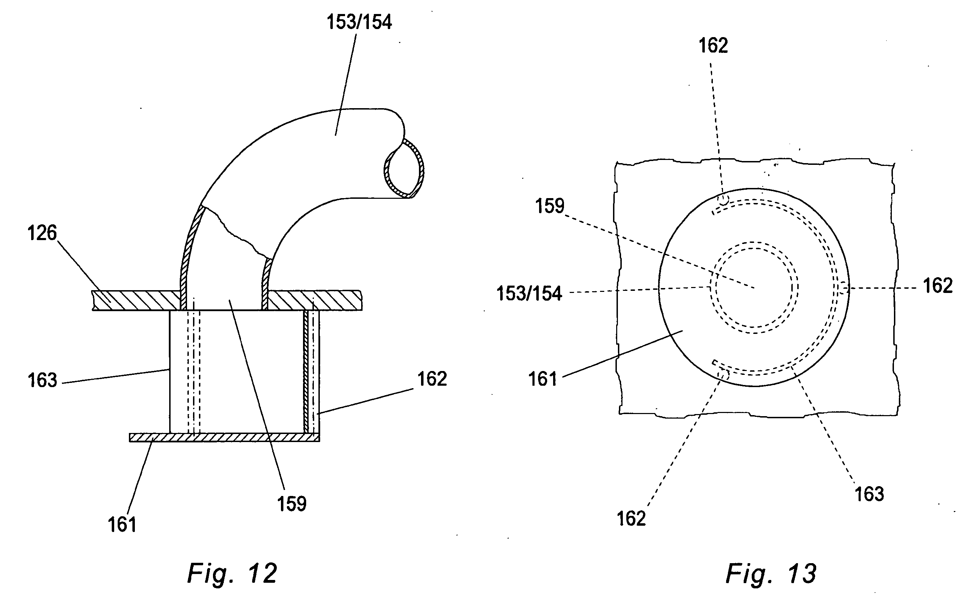

Aus Fig. 5 und Fig. 6 ist ein abgewandelter Zwischenboden 121 ersichtlich. Er wird durch zwei Platten 122 und 123 gebildet. Sie sind beide mit der Umfangswand 72 des Behältnisses dicht verbunden. Sie haben einen geringen gegenseitigen Abstand voneinander. In jeder der beiden Platten 122 und 123 sind Durchtrittsöffnungen 124 bzw. 125 vorhanden, von denen je zwei dargestellt sind, die in Fig. 5 in die gemeinsame Schnittebene verlegt dargestellt sind. Aus Fig. 12 ist ersichtlich, dass die Durchtrittsöffnungen 124 der Platte 122 gegenüber den Durchtrittsöffnungen 125 der Platte 123 versetzt angeordnet sind. Dadurch wird ein gewisses Strömungshindernis geschaffen.

Bei dem aus Fig. 7 ersichtlichen Ausführungsbeispiel des Behältnisses 33 werden die gleichen Zwischenböden 121 wie bei dem zuvor geschilderten Ausführungsbeispiel verwendet.

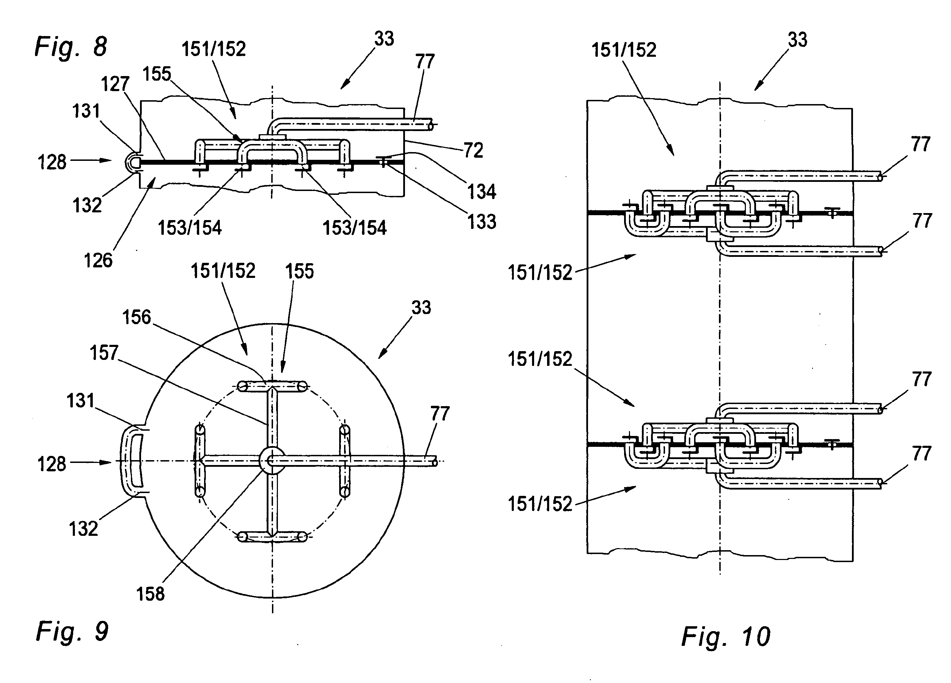

Bei dem Ausführungsbeispiel nach Fig. 8 und Fig. 9 wird der Zwischenboden 126 durch eine geschlossene Platte 127 gebildet, die mit der Umfangswand 72 des Behältnisses dicht verbunden ist. Im Höhenbereich des Zwischenbodens 127 ist eine Bypassleitung 128 vorhanden, die an der Außenseite der Umfangswand 72 angeordnet ist. Ihr eines Ende ist an den Teilraum oberhalb des Zwischenbodens 126 angeschlossen und ihr anderes Ende an den Teilraum unterhalb des Zwischenbodens 126 angeschlossen. Abweichend von der in Fig. 8 aus zeichentechnischen Gründen gewählten Darstellung der Bypassleitung 128 ist es zweckmäßig, dass ihre Anschlussöffnungen 131 und 132 an den Zwischenboden 126 angrenzen. Das wird dadurch erreicht, dass die Bypassleitung 128 nicht in einer Vertikalebene des Behältnisses 33 angeordnet ist, sondern stattdessen die beiden Anschlussstellen 131 und 132 der Bypassleitung 128 auf je einer Mantellinie der Umfangswand 72 angeordnet sind, die in Umfangsrichtung einen gegenseitigen Abstand haben, wie es aus Fig. 12 ersichtlich ist.

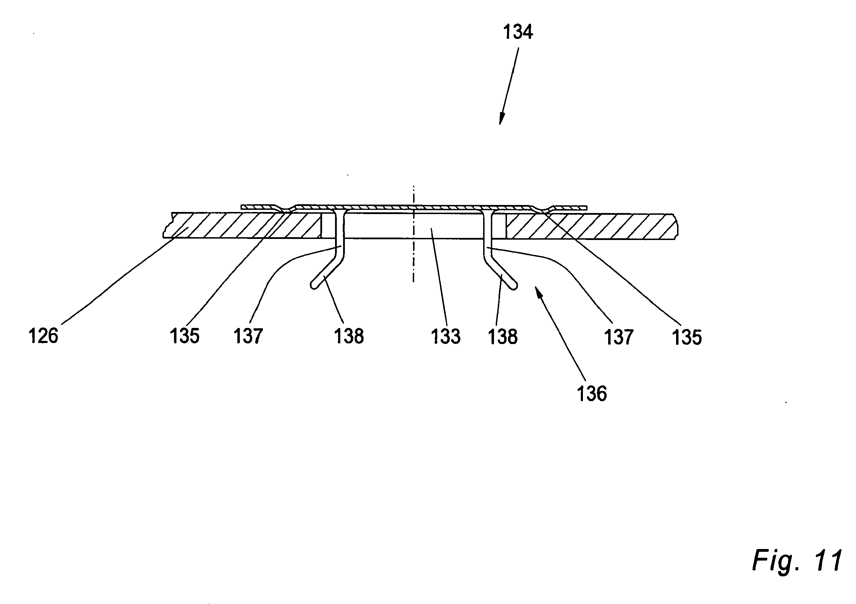

Vor allem dann, wenn ein Zwischenboden, wie der Zwischenboden 126, aus einer geschlossenen Platte 127 besteht und eine oder mehrere Bypassleitungen 128 auf der Außenseite des Behältnisses 33 vorhanden sind (Fig. 11 und Fig. 12), ist es zweckmäßig, dass in dem Zwischenboden 126 wenigstens eine Entlüftungsöffnung 133, besser mehrere, angeordnet ist (Fig. 8, rechts), die durch einen Ventilteller 134 abgedeckt wird.

Der Ventilteller 134 ist größer als die Entlüftungsöffnung 133, so dass der Randbereich des Ventiltellers 134 den Randbereich der Entlüftungsöffnung 133 überdeckt (Fig. 11). In dem Überdeckungsbereich des Ventiltellers 134 und des Zwischenbodens 126 sind Abstandshalter 135 angeordnet, mittels der zwischen dem Ventilteller 134 und dem Zwischenboden 126 ein Spalt sehr geringer Höhe eingehalten wird. Die Abstandshalter 135 werden am einfachsten durch Prägenoppen des Ventiltellers 134 gebildet.

Der Ventilteller 134 ist mit einer Abhebesicherung 136 ausgerüstet, die mit der Unterseite des Zwischenbodens 126 zusammen wirkt. Die Abhebesicherung 136 wird durch zwei Fortsätze 137 gebildet, die an der Unterseite des Ventiltellers 134 angeordnet sind und mit ihm fest verbunden sind, die sich durch die Entlüftungsöffnung 133 hindurch erstrecken und deren Endabschnitt 138 nach dem Auflegen des Ventiltellers 134 auf den Zwischenboden 126 nach außen hin so weit abgewinkelt werden, dass beide Endabschnitte 138 in den Grundrissbereich des Zwischenbodens 126 außerhalb der Entlüftungsöffnung 133 hineinreichen.

Wie schon in Fig. 4 angedeutet ist und in Fig. 5 bis Fig. 10 im Einzelnen dargestellt ist, sind innerhalb eines Teilraumes 35 des Behältnisses 33 an diejenige Anschlussleitung 77, die als Zuflussleitung 78 dient, eine Verteilervorrichtung 141 angeschlossen und an diejenige Anschlussleitung 77, die als Abflussleitung 79 dient, eine Sammelvorrichtung 142 angeschlossen. Da die Anschlussleitung 77 je nach Bedarf mal als Zuflussleitung 78 und mal als Abflussleitung 79 eingesetzt werden, ist es zweckmäßig die Verteilervorrichtung 141 und die Sammelvorrichtung 142 baugleich auszubilden.

In Fig. 5 und Fig. 6 wird die Verteilervorrichtung 141 durch ein ringförmig geschlossenes Verteilerrohr gebildet, das kurz als Ringverteiler 143 bezeichnet ist. In gleicher Weise wird die Sammelvorrichtung 142 durch ein ringförmig geschlossenes Sammelrohr gebildet, das kurz als Ringsammler 144 bezeichnet wird. Sowohl der Ringverteiler, wie auch der Ringsammler weisen auf der Ringaußenseite und auf der Ringinnenseite eine Anzahl Austrittsöffnungen 145 bzw. Eintrittsöffnungen 146 auf, die gleichmäßig am Ringumfang verteilt angeordnet sind.

Bei einem Teil der Austritts-/Eintrittsöffnungen 145/146 ist deren Achse in einer gemeinsamen Ebene gelegen, die mit der Ringebene fluchtet. Bei einem anderen Teil der Austritts-/Eintrittsöffnungen 145/146 ist deren Achse parallel zu der Mantellinie eines Kegels ausgerichtet, dessen Kegelachse mit der Ringachse des Ringverteilers oder Ringsammlers fluchtet. Diese Achse ist dem benachbarten Zwischenboden 121 zugegehrt.

Der Ringverteiler 143 und der Ringsammler 144 sind parallel zu dem benachbarten Zwischenboden 121 ausgerichtet. Sie sind an eine Verteilerspinne 147 bzw. Sammlerspinne 148 angeschlossen, die ihrerseits an die Anschlussleitung 77 angeschlossen ist.

Bei dem Ausführungsbeispiel nach Fig. 8 und Fig. 9 wird die Verteilervorrichtung 151 und die Sammelvorrichtung 152 durch je eine Anzahl Rohrabschnitte gebildet, die als Austrittsrohre 153, bzw. als Sammelrohre 154 dienen. Je zwei dieser Austrittsrohre oder Sammelrohre sind zu einem Bügel mit U-förmigem Aufriss miteinander vereinigt.

Im Scheitelpunkt der U-Form der Rohrbügel 155 ist ein gemeinsamer Anschluss 156 gelegen, an den das eine Ende eines Zwischenrohres 157 angeschlossen ist, dessen anderes Ende an einen Verteilertopf 158 angeschlossen ist. Daran ist die Anschlussleitung 77 angeschlossen.

Die Mündung der Austrittsrohre 53 und der Sammelrohre 154 sind lotrecht zum Zwischenboden 126 ausgerichtet. Zur Vermeidung von Toträumen in den Teilräumen 34 sind die Verteilervorrichtungen 151 und die Sammelvorrichtungen 152 vom Teilraum aus betrachtet auf der Rückseite des den Teilraum begrenzenden Zwischenboden 35 angeordnet und ihre Austrittsrohr 153 bzw. Sammelrohre 154 erstrecken sich nur bis in eine darauf abgestimmte Durchtrittsöffnung im Zwischenboden 126 hinein, mit dessen Vorderseite sie bündig abschließen. Die Austrittsrohre 153 und die Sammelrohre 154 sind mit dem Zwischenboden 126 dicht verbunden.

Bei den Austrittsrohren 153 und bei den gleich ausgebildeten Sammelrohren 154 ist in der Fluchtlinie der Mündung eine Prallplatte 161 angeordnet (Fig. 12 und Fig. 13). Die Prallplatte 161 ist kreisrund. Ihr Durchmesser ist größer als die Mündung 159 der Austrittsrohre 153 und der Sammelrohre 154. Die Prallplatte 161 wird von drei Streben 162 in einem bestimmten Abstand vom Zwischenboden 126 gehalten, mit dem die Streben ebenso wie mit der Prallplatte 161 fest verbunden sind.

Der aus der Mündung 159 der Austrittsrohre 153 senkrecht zum Trennboden 126 austretende Würzeteilstrom wird von der Prallplatte 161 in eine Richtung umgelenkt, die zumindest näherungsweise parallel zum Trennboden 126 ist. Wenn in dem Teilraum 34 in den die Teilmenge der Würze einströmt ein bestimmtes Strömungsverhalten haben soll, dann kann das dadurch bewirkt werden, dass zumindest an einem Teil der Prallplatten 161 ein Leitschirm 163 angebracht wird, der sich bogenförmig entlang dem Rand der Prallplatte 161 über einen bestimmten Umfangsabschnitt der Prallplatte 161 erstreckt und dessen Höhe zumindest annähernd gleich dem Abstand der Prallplatte 161 vom Zwischenboden 126 ist.

Wenn wenigstens bei einem Teil der Leitschirme 163 ihre lotrechte Symmetrieebene eine Ausrichtung hat, die eine tangentiale Komponente in Bezug auf das Behältnis 33 einschließt, dann kann dadurch in der Teilmenge eine Rotationsbewegung erzeugt werden. Dadurch kann in dem betreffenden Teilraum eine rotierende Pfropfenströmung der Teilmenge erzeugt werden.

### Bezugszeichenliste

- 30: Läuterungsvorrichtung
- 33: Behältnis (Turm)
- 34: Teilräume
- 35: Zwischenböden
- 36: Durchtrittsöffnungen

- 72: Umfangswand
- 73: Boden
- 74: Deckel
- 75: Be- und Entlüftungsöffnung
- 76: Zuflussleitungen
- 77: Anschlussleitungen
- 78: Zuflussleitungen
- 79: Abflussleitungen

- 81: Kochvorrichtung
- 82: 1. Wärmetauscher
- 83: 2. Wärmetauscher
- 84: Heißhaltevorrichtung
- 85: Druckminderventil
- 86: Entspannungsgefäß
- 87: Pumpe
- 88: Druckminderventil
- 89: Druckminderventil

- 91: Auslassleitung
- 92: Brüdenkondensator
- 93: Zuführvorrichtung
- 94: Pumpe
- 95: Außenkocher
- 96: Druckminderventil
- 97: Entspannungsgefäß
- 98: Auslassleitung
- 99: Brüdenkondensator

- 101: Pumpe
- 102: Druckminderventil
- 103: Entspannungsgefäß
- 104: Auslassleitung
- 105: Brüdenkondensator
- 106: Pumpe
- 108: Abflussleitung
- 109: Whirlpool
- 110: Trubabscheidevorrichtung
- 111: Pumpe
- 112: Leitung
- 113: Kühlvorrichtung
- 114: Gärbehältnis
- 121: Zwischenboden
- 122: Platte
- 123: Platte
- 124: Durchtrittsöffnungen
- 125: Durchtrittsöffnungen
- 126: Zwischenboden
- 127: Platte
- 128: Bypassleitung

- 131: Anschlussöffnungen
- 132: Anschlussöffnungen
- 133: Entlüftungsöffnungen
- 134: Ventilteller
- 135: Abstandhalter
- 136: Abhebesicherung
- 137: Streben
- 138: Endabschnitt

- 141: Verteilervorrichtung
- 142: Sammelvorrichtung
- 143: Ringverteiler
- 144: Ringsammler
- 145: Austrittsöffnungen
- 146: Eintrittsöffnungen
- 147: Verteilerspinne
- 148: Sammlerspinne

- 151: Verteilervorrichtung
- 152: Sammelvorrichtung
- 153: Austrittsrohre
- 154: Sammelrohre
- 155: Rohrbügel
- 156: Anschluss
- 157: Zwischenrohr
- 158: Verteilertopf
- 159: Mündung

- 161: Prallplatte
- 162: Streben
- 163: Leitschirm

## Patentansprüche

1. Verfahren zur Behandlung von Bierwürze, mit den Verfahrensschritten:
- die Bierwürze wird in wenigstens zwei Teilmengen nach ihren Eigenschaften getrennt von einander erfasst,
- die verschiedenen Teilmengen der Bierwürze werden in einem gemeinsamen zusammenhängenden Behältnis (33) in zugeordneten turmartig übereinander angeordneten Teilräumen (34) des Behältnisses (33) aufgefangen, die mittels Trennböden (35) mit Durchtrittsöffnungen (36) weitgehend getrennt von einander sind und
- diese Teilmengen werden getrennt von einander behandelt.

2. Verfahren nach Anspruch 1, mit den Verfahrensschritten:
- beim Abziehen der Bierwürze aus der Läutervorrichtung (30) wird die Bierwürze in ein Ausgleichsgefäß (47) eingeleitet, dessen Fassungsvermögen kleiner als die vorgesehenen Teilmengen ist,
- aus dem Ausgleichsgefäß (47) wird die Bierwürze in verschiedenen Teilmengen dem zugeordneten Teilraum (34) des gemeinsamen Behältnisses (33) zugeleitet.

3. Verfahren nach Anspruch 1, mit den Verfahrensschritten:
- vor oder nach dem Einleiten der verschiedenen Teilmengen in den zugeordneten Teilraum(34) des gemeinsamen Behältnisses (33) werden den einzelnen Teilmengen Zusatzstoffe hinzugefügt,
- die Dosierung der Zusatzstoffe richtet sich nach den Eigenschaften der einzelnen Teilmengen.

4. Verfahren nach Anspruch 1 oder 2, mit den Verfahrensschritten:
- vor dem Einleiten der verschiedenen Teilmengen in den zugeordneten Teilraum (34) des gemeinsamen Behältnisses (33) werden die einzelnen Teilmengen getrennt voneinander einer Erhitzung auf zumindest annähend Siedetemperatur unterzogen, vorzugsweise im Temperaturbereich von 100°C bis 120°C,
- dabei erfolgt das Ausdampfen innerhalb des Erhitzungssystems (81),
- die Teilmengen werden einer Nachverdampfung unterzogen,
- die Nachverdampfung wird bei einem Druck durchgeführt, der höchstens gleich dem Druck an demjenigen Ort ist, zu dem die Teilmenge hingeleitet wird.

5. Verfahren nach Anspruch 1, 2 oder 3, mit den Verfahrensschritten:
- vor dem Einleiten der verschiedenen Teilmengen in den zugeordneten Teilraum (34) des gemeinsamen Behältnisses (33) werden die einzelnen Teilmengen getrennt voneinander einer Erhitzung auf eine Heißhaltetemperatur unterzogen, vorzugsweise im Temperaturbereich von 100°C bis 120°C,
- die einzelnen Teilmengen werden unmittelbar danach wieder abgekühlt, vorzugsweise auf zumindest annähernd Siedetemperatur bei Atmosphärendruck,
- die Teilmengen werden einer Nachverdampfung unterzogen,
- die Nachverdampfung wird bei einem Druck durchgeführt, der höchstens gleich dem Druck an demjenigen Ort ist, zu dem die Teilmenge zurückgeleitet wird.

6. Verfahren nach einem der Ansprüche 1 bis 5, mit den Verfahrensschritten:
- von den einzelnen Teilmengen in den verschiedenen Teilräumen (34) des Behältnisses (33) wird für eine Behandlungsstufe der Bierwürze nur ein sehr geringer Volumenanteil abgezogen und nach der Behandlung wieder in den zugeordneten Teilraum (34) zurückgeleitet,
- bei der Auswahl des Ortes für das Abziehen und für das Zurückleiten des Volumenanteils werden die bei der Behandlung des Volumenanteils auftretenden Änderungen der Dichte berücksichtigt.

7. Verfahren nach Anspruch 6, mit dem Verfahrensschritt:
- der umgewälzte Volumenanteil wird einem Kochvorgang mit Entspannungsverdampfung und zusätzlich einer Nachverdampfung unterzogen.

8. Verfahren nach Anspruch 6, mit dem Verfahrensschritt:
- der umgewälzte Volumenanteil wird einer Vakuumverdampfung unterzogen.

9. Verfahren nach Anspruch 6, mit dem Verfahrensschritt:
- der umgewälzte Volumenanteil wird einem Kochvorgang in Form einer Dünnfilmverdampfung und zusätzlich einer Nachverdampfung unterzogen.

10. Verfahren nach Anspruch 7 oder 8, mit dem Verfahrensschritt:
- die Nachverdampfung wird bei einem Druck durchgeführt, der höchstens gleich dem Druck an demjenigen Ort ist, zu dem der Volumenanteil zurückgeleitet wird.

11. Verfahren nach Anspruch 1, 2, 3 oder 5, mit den Verfahrensschritten:
- von den Teilmengen in den verschiedenen Teil räumen (34) des Behältnisses (33) wird eine der Teilmengen zumindest annähernd vollständig abgezogen und gemäß Behandlungsplan behandelt,
- nach dieser Behandlung wird diese Teilmenge nicht in das Behältnis (33) zurückgeleitet sondern anderen Behandlungen gemäß Behandlungsplan zugeleitet.

12. Verfahren nach Anspruch 11, mit den Verfahrensschritten:
- die abgezogene Teilmenge wird, getrennt von anderen Teilmengen, einer Erhitzung auf zumindest annähend Siedetemperatur unterzogen, vorzugsweise im Temperaturbereich von 100°C bis 120°C,
- dabei erfolgt das Ausdampfen innerhalb des Erhitzungssystems.

13. Verfahren nach einem der Ansprüche 1 bis 12, mit dem Verfahrensschritt:
- nach Abschluss derjenigen Behandlungsstufen, die eine Erhitzung der Würze erfordern, werden einzelne oder alle Teilmengen auf eine Temperatur abgekühlt, die im Temperaturbereich von 85° bis 100° liegt.

14. Verfahren nach einem der Ansprüche 1 bis 13, mit dem Verfahrensschritt:
- bei einzelnen oder allen Teilmengen wird der Heißtrub durch eine externe Trubabscheidung (63; 109; 110) abgeschieden.

15. Verfahren nach einem der Ansprüche 1 bis 14, mit dem Verfahrensschritt:
- zumindest einzelne Teilmengen werden, vorzugsweise nach Abschluss aller anderen Behandlungsstufen, einer Vakuumverdampfung unterzogen.

16. Verfahren nach einem der Ansprüche 1 bis 14, mit dem Verfahrensschritt:
- zumindest einzelne Teilmengen werden einer Dünnfilmverdampfung unterzogen.

17. Verfahren nach einem der Ansprüche 1 bis 14, mit dem Verfahrensschritt:
- zumindest einzelnen Teilmengen werden mittels eines aufsteigenden gasförmigen Mediums im freien Gegenstrom flüchtige Bestandteile und vorzugsweise auch Wasser entzogen,
- das gasförmige Medium wird mit einer Temperatur eingesetzt,
- - die niedriger als die Temperatur der Teilmenge ist, wobei vorzugsweise atmosphärische Luft als Medium verwendet wird, oder
- - die zumindest annähernd gleich der Temperatur der Teilmenge ist, wobei vorzugsweise atmosphärische Luft oder Sattdampf als Medium verwendet wird, oder
- - die höher als die Temperatur der Teilmenge ist, wobei vorzugsweise Heißdampf als Medium verwendet wird.

18. Verfahren nach einem der Ansprüche 1 bis 17, mit dem Verfahrensschritt:
- zumindest ein Teil der Teilmengen wird getrennt von den anderen auf zumindest annähernd Anstelltemperatur gekühlt und anschließend getrennt von einander vergoren und gereift.

19. Verfahren nach Anspruch 7 oder 9 mit dem Verfahrensschritt:
- nach Ablauf einer vorgegebenen Kochzeit wird die Energiezufuhr für den Kochvorgang unterbrochen und die Teilmenge bzw. der Volumenanteil einem Verdunstungsvorgang überlassen.

20. Vorrichtung zum Durchführen des Verfahrens nach Anspruch 1, mit den Merkmalen:
- es ist ein Behältnis (33) vorhanden, das gebildet wird
- - durch eine Umfangswand (72),
- - durch einen Boden (73) und
- - durch einen Deckel (74),
- am Deckel (74) ist eine Be- und Entlüftungsöffnung(75) vorhanden, die wahlweise absperrbar ist.
- in dem Behältnis (33) ist wenigstens ein Zwischenboden (35) mit wenigstens einer Durchtrittsöffnung (36) vorhanden, mittels dessen der Innenraum des Behältnisses (33) in zwei Teilräume (34) unterteilt ist,
- am Behältnis (33) sind für jeden Teilraum (34) wenigstens eine Zuflussleitung (76; 78) und wenigstens eine Abflussleitung (79) angeschlossen.

21. Vorrichtung nach Anspruch 20, mit dem Merkmal:
- die Umfangswand (72) des Behältnisses (33) ist als gerader Kreiszylinder ausgebildet.

22. Vorrichtung nach Anspruch 20 oder 21, mit den Merkmalen:
- der Zwischenboden (35) wird durch eine Platte gebildet, die mit der Umfangswand (72) dicht verbunden ist,
- im Zwischenboden (35) ist wenigstens eine Durchtrittsöffnung (36) vorhanden.

23. Vorrichtung nach Anspruch 20 oder 21, mit den Merkmalen:
- der Zwischenboden (121) wird durch zwei Platten (122; 123) gebildet,
- - die mit der Umfangswand (72) dicht verbunden sind und
- - die in einem gegenseitigen Abstand voneinander angeordnet sind,
- in jeder der beiden Platten (122; 123) ist wenigstens eine Durchtrittsöffnung (124; 125) vorhanden,
- die Durchtrittsöffnung (124) der einen Platte (122) ist gegenüber der Durchtrittsöffnung (125) der anderen Platte (123) versetzt angeordnet.

24. Vorrichtung nach einem der Ansprüche 21 bis 23, mit dem Merkmal:
- innerhalb eines Teilraumes ist
- - an die Zuflussleitung (78) eine Verteilervorrichtung (141) angeschlossen und, vorzugsweise,
- - an die Abflussleitung (79) eine Sammelvorrichtung (142) angeschlossen.

25. Vorrichtung nach Anspruch 24, mit den Merkmalen:
- die Verteilervorrichtung (141) wird durch wenigstens ein ringförmig geschlossenes Verteilerrohr (143) (Ringverteiler) gebildet, das parallel zum Zwischenboden (121) ausgerichtet ist,
- der Ringverteiler (143) weist auf der Ringaußenseite und vorzugsweise auch auf der Ringinnenseite eine Anzahl Austrittsöffnungen (145) auf, die vorzugsweise gleichmäßig am Ringumfang verteilt angeordnet sind,
- zumindest bei einem Teil der Austrittsöffnungen (145) ist deren Achse in einer gemeinsamen Ebene gelegen, die mit der Ringebene fluchtet, und/oder
- zumindest bei einem Teil der Austrittsöffnungen (145) ist deren Achse parallel zu der Mantellinie eines Kegels ausgerichtet, dessen Kegelachse mit der Ringachse des Ringverteilers (145) fluchtet.

26. Vorrichtung nach Anspruch 24, mit den Merkmalen:
- die Sammelvorrichtung (142) wird durch wenigstens ein ringförmig geschlossenes Sammelrohr (144) (Ringsammler) gebildet, das parallel zum Zwischenboden (121) ausgerichtet ist,
- der Ringsammler (144) weist auf der Ringaußenseite und vorzugsweise auch auf der Ringinnenseite eine Anzahl Eintrittsöffnungen (146) auf, die vorzugsweise gleichmäßig am Ringumfang verteilt angeordnet sind,
- zumindest bei einem Teil der Eintrittsöffnungen (146) ist deren Achse in einer gemeinsamen Ebene gelegen, die mit der Ringebene fluchtet, und/oder
- zumindest bei einem Teil der Eintrittsöffnungen (146) ist deren Achse parallel zu der Mantellinie eines Kegels ausgerichtet, dessen Kegelachse mit der Ringachse des Ringsammlers (144) fluchtet.

27. Vorrichtung nach Anspruch 25 oder 26, mit dem Merkmal:
- bei der Ausrichtung der Achse der Austrittsöffnungen (145) und/oder der Eintrittsöffnungen (146) parallel zu einer Kegelmantellinie ist diese Achse dem benachbarten Zwischenboden (121) zugekehrt.

28. Vorrichtung nach Anspruch 25 oder 26, mit den Merkmalen:
- die Verteilervorrichtung (151) und/oder die Sammelvorrichtung (152) wird durch eine Anzahl Rohrabschnitte (153; 154) (Austrittsrohre bzw. Sammelrohre) gebildet,
- - deren eines Ende an die Zuflussleitung (78) bzw.
an die Abflussleitung (79) angeschlossen ist und
- - deren anderes Ende frei im Teilraum (34) mündet.

29. Vorrichtung nach Anspruch 28, mit den Merkmalen:
- je zwei der Austrittsrohre (153) bzw. Sammelrohre (154) sind miteinander zu einem Rohrbügel (155) mit U-förmigem Aufriss vereinigt,
- im Scheitelpunkt der U-Form ist ein gemeinsamer Anschluss (156) an die Zuflussleitung (78) bzw. an die Abflussleitung (79) gelegen.

30. Vorrichtung nach Anspruch 28 oder 29, mit dem Merkmal:
- die Mündung (159) zumindest eines Teils der Austrittsrohre (153) und/oder der Sammelrohre (154) ist zumindest annähernd parallel zur Achse des Behältnisses (33) ausgerichtet.

31. Vorrichtung nach Anspruch 28 oder 29, mit den Merkmalen:
- die Austrittsrohre (153) und/oder die Sammelrohre (154) sowie ihr Anschluss an die Zuflussleitung (78) bzw. an die Abflussleitung (79) sind auf der Rückseite des zugeordneten Zwischenbodens (128) angeordnet,
- der Endabschnitt dieser Austrittsrohre (153) und/oder dieser Sammelrohre (154) ist durch eine darauf abgestimmte Durchtrittsöffnung im Zwischenboden (126) durch diesen hindurchgeführt und vorzugsweise gegenüber dem Zwischenbodens (126) abgedichtet,
- die Mündung (159) dieser Endabschnitte ist vorzugsweise bündig mit der Vorderseite des Zwischenbodens (126).

32. Vorrichtung nach Anspruch 31, mit den Merkmalen:
- die Endabschnitte der Austrittsrohre (153) und der Sammelrohre (154) sind gegeneinander versetzt angeordnet.

33. Vorrichtung nach einem der Ansprüche 28 bis 32, mit den Merkmalen:
- wenigstens bei einem Teil der Austrittsrohre (153) ist in der Fluchtlinie der Mündung (159) je eine Prallplatte (161) in einem vorgegebenen Abstand von der Mündung (159) angeordnet,
- die Prallplatte (161) ist vorzugsweise kreisförmig ausgebildet.

34. Vorrichtung nach Anspruch 33, mit den Merkmalen:
- wenigstens an einem Teil der Prallplatten (161) ist ein Leitschirm (163) angeordnet,
- - der sich bogenförmig entlang dem Rand der Prallplatte (161) über einen vorgegebenen Umfangsabschnitt der Prallplatte (161) erstreckt und
- - dessen Höhe zumindest annähernd gleich dem Abstand der Prallplatte (161) vom Zwischenboden (126) ist.

35. Vorrichtung nach Anspruch 32, mit dem Merkmal:
- wenigstens bei einem Teil der Leitschirme (163) hat ihre lotrechte Symmetrieebene eine Ausrichtung, die zumindest eine tangentiale Komponente in Bezug auf das Behältnis einschließt.

## Claims

1. A method of treating beer wort, having the method steps:
- the beer wort is gathered into at least two partial quantities separately from one another and according to their properties,
- the different partial quantities of the beer wort are collected in a common, joined-together receptacle (33) in associated partial spaces (34), of the receptacle (33), arranged one above the other in a tower-like manner, these partial spaces being substantially separated from one another by means of separating bottoms (35) with through openings (36) and
- these partial quantities are treated separately from one another.

2. A method according to claim 1, having the method steps:
- upon drawing off of the beer wort from the lautering device (30), the beer wort is introduced into an equalising vessel (47) whose capacity is smaller than the planned partial quantities,
- the beer wort is fed in different partial quantities from the equalising vessel (47) to the associated partial space (34) of the common receptacle (33).

3. A method according to claim 1, having the method steps:
- additives are added to the individual partial quantities before or after introduction of the different partial quantities into the associated partial space (34) of the common receptacle (33),
- metering of the additives is suited to the properties of the individual partial quantities.

4. A method according to claim 1 or 2, having the method steps:
- the individual partial quantities are subjected separately from one another to heating to at least substantially boiling temperature, preferably in the temperature range from 100°C to 120°C, before introduction of the different partial quantities into the associated partial space (34) of the common receptacle (33),
- here the evaporation takes place within the heating system (81),
- the partial quantities are subjected to re-evaporation,
- the re-evaporation is carried out at a pressure which is at most equal to the pressure at that site to which the partial quantity is led.

5. A method according to claim 1, 2 or 3, having the method steps:
- the individual partial quantities are subjected separately from one another to heating to a keeping-hot temperature, preferably in the temperature range from 100°C to 120°C, before introduction of the different partial quantities into the associated partial space (34) of the common receptacle (33),
- the individual partial quantities are cooled down immediately thereafter, preferably to at least substantially boiling temperature at atmospheric pressure,
- the partial quantities are subjected to re-evaporation,
- the re-evaporation is carried out at a pressure which is at most equal to the pressure at that site to which the partial quantity is led back.

6. A method according to any one of claims 1 to 5, having the method steps:
- only a very small volume proportion of the individual partial quantities in the different partial spaces (34) of the receptacle (33) is drawn off for a treatment stage of the beer wort and led back into the associated partial space (34) again after the treatment,
- upon selection of the site for the volume proportion to be drawn off and led back, the density changes occurring upon treatment of the volume proportion are taken into account.

7. A method according to claim 6, having the method step:
- the circulated volume proportion is subjected to a boiling procedure with flash evaporation and additionally to a re-evaporation.

8. A method according to claim 6, having the method step:
- the circulated volume proportion is subjected to vacuum evaporation.

9. A method according to claim 6, having the method step:
- the circulated volume proportion is subjected to a boiling procedure in the form of a thin film evaporation and additionally to a re-evaporation.

10. A method according to claim 7 or 8, having the method step:
- the re-evaporation is carried out at a pressure which is at most equal to the pressure at that site to which the volume proportion is led back.

11. A method according to claims 1, 2, 3 or 5, having the method steps:
- one of the partial quantities is drawn off at least substantially completely from the partial quantities in the different partial spaces (34) of the receptacle (33) and is treated according to the treatment plan,
- this partial quantity is not led back into the receptacle (33) after this treatment but is fed to other treatments according to the treatment plan.

12. A method according to claim 11, having the method steps:
- the drawn-off partial quantity is, separately from other partial quantities, subjected to heating to at least substantially boiling temperature, preferably in the temperature range from 100°C to 120°C,
- here the evaporation takes place within the heating system.

13. A method according to any one of claims 1 to 12, having the method step:
- after completion of those treatment stages requiring heating of the wort, individual partial quantities or all partial quantities are cooled down to a temperature lying in the temperature range from 85° to 100°.

14. A method according to any one of claims 1 to 13, having the method step:
- in the case of individual partial quantities or all partial quantities, the hot trub is separated by an external trub separating device (63; 109; 110).

15. A method according to any one of claims 1 to 14, having the method step:
- at least individual partial quantities are subjected to vacuum evaporation, preferably after completion of all other treatment stages.

16. A method according to any one of claims 1 to 14, having the method step:
- at least individual partial quantities are subjected to thin film evaporation.

17. A method according to any one of claims 1 to 14, having the method step:
- volatile constituents and preferably also water are removed from at least individual partial quantities by means of a rising, gaseous medium in free counterflow,
- the gaseous medium is used at a temperature,
- - which is lower than the temperature of the partial quantity, wherein atmospheric air is preferably used as the medium, or
- - which is at least substantially equal to the temperature of the partial quantity, wherein atmospheric air or saturated vapour is preferably used as the medium, or
- - which is higher than the temperature of the partial quantity, wherein superheated steam is preferably used as the medium.

18. A method according to any one of claims 1 to 17, having the method step:
- at least some of the partial quantities are cooled to at least substantially pitching temperature separately from the other partial quantities and then are fermented and matured separately from one another.

19. A method according to claim 7 or 9, having the method step:
- after a given boiling time has passed, the energy supply for the boiling procedure is interrupted and the partial quantity or the volume proportion is given over to an evaporation procedure.

20. A device for carrying out the method according to claim 1, having the features:
- there is a receptacle (33) formed
- - by a circumferential wall (72),
- - by a bottom (73) and
- - by a cover (74),
- an aeration and deaeration opening (75) is present in the cover (74) and optionally can be shut off,
- in the receptacle (33) there is at least one intermediate bottom (35), with at least one through opening (36), by means of which the internal space of the receptacle (33) is divided into two partial spaces (34),
- at least one inflow line (76; 78) and at least one outflow line (79) are attached to the receptacle (33) for each partial space (34).

21. A device according to claim 20, having the feature:
- the circumferential wall (72) of the receptacle (33) is in the form of a straight circular cylinder.

22. A device according to claim 20 or 21, having the features:
- the intermediate bottom (35) is formed by a plate imperviously connected to the circumferential wall (72),
- at least one through opening (36) is present in the intermediate bottom (35).

23. A device according to claim 20 or 21, having the features:
- the intermediate bottom (121) is formed by two plates (122; 123),
- - which are imperviously connected to the circumferential wall (72) and
- - which are arranged mutually spaced apart from one another,
- in each of the two plates (122; 123) there is at least one through opening (124; 125),
- the through opening (124) of one plate (122) is arranged staggered with respect to the through opening (125) of the other plate (123).

24. A device according to any one of claims 21 to 23, having the feature:
- within a partial space
- - a distribution device (141) is attached to the inflow line (78) and, preferably,
- - a collecting device (142) is attached to the outflow line (79).

25. A device according to claim 24, having the features:
- the distribution device (141) is formed by at least one annularly closed distribution pipe (143) (annular distributor) directed parallel to the intermediate bottom (121),
- the annular distributor (143) has a number of outlets (145) on the ring exterior and preferably also on the ring interior, which are preferably arranged so as to be distributed uniformly over the ring circumference,
- at least in the case of some of the outlets (145), their axis is located in a common plane aligned with the annular plane, and/or
- at least in the case of some of the outlets (145), their axis is directed parallel to the surface line of a cone whose cone axis is aligned with the annular axis of the annular distributor (145 [sic]).

26. A device according to claim 24, having the features:
- the collecting device (142) is formed by at least one annularly closed collecting pipe (144) (annular collector) directed parallel to the intermediate bottom (121),
- the annular collector (144) has a number of inlets (146) on the ring exterior and preferably also on the ring interior, which are preferably arranged so as to be distributed uniformly over the ring circumference,
- at least in the case of some of the inlets (146), their axis is located in a common plane aligned with the annular plane, and/or
- at least in the case of some of the inlets (146), their axis is directed parallel to the surface line of a cone whose cone axis is aligned with the annular axis of the annular collector (144).

27. A device according to claim 25 or 26, having the feature:
- in the case of the orientation of the axis of the outlets (145) and/or the inlets (146) parallel to a cone surface-line, this axis is facing the adjacent intermediate bottom (121).

28. A device according to claim 25 or 26, having the features:
- the distribution device (151) and/or the collecting device (152) is/are formed by a number of pipe sections (153; 154) (outlet pipes and collecting pipes respectively).
- - whose one end is attached to the inflow line (78) or to the outflow line (79) as the case may be and
- - whose other end issues freely in the partial space (34).

29. A device according to claim 28, having the features:
- two each of the outlet pipes (153) or collecting pipes (154) as the case may be are combined together to form a curved tube (155) of U-shaped vertical section,
- at the apex of the U-shape, a common connection (156) is applied to the inflow line (78) or to the outflow line (79) as the case may be.

30. A device according to claim 28 or 29, having the feature:
- the mouth (159) of at least some of the outlet pipes (153) and/or the collecting pipes (154) is directed at least substantially parallel to the axis of the receptacle (33).

31. A device according to claim 28 or 29, having the features:
- the outlet pipes (153) and/or the collecting pipes (154) as well as their connection to the inflow line (78) and to the outflow line (79) respectively are arranged on the rear of the associated intermediate bottom (128),
- the end portion of these outlet pipes (153) and/or these collecting pipes (154) is guided through the intermediate bottom (126) through a through opening, matched thereto, in the intermediate bottom (126) and is preferably sealed with respect to the intermediate bottom (126),
- the mouth (159) of these end portions is preferably flush with the front side of the intermediate bottom (126).

32. A device according to claim 31, having the features:
- the end portions of the outlet pipes (153) and the collecting pipes (154) are arranged staggered with respect to one another.

33. A device according to any one of claims 28 to 32, having the features:
- in the case of at least some of the outlet pipes (153), a respective deflector (161) is arranged in alignment with the mouth (159), at a given distance from the mouth (159),
- the deflector (161) is preferably circular.

34. A device according to claim 33, having the features:
- on at least some of the deflectors (161) there is arranged a guiding screen (163),
- - which extends in a curve along the edge of the deflector (161) over a given circumferential portion of the deflector (161) and
- - whose height is at least substantially identical to the distance of the deflector (161) from the intermediate bottom (126).

35. A device according to claim 32, having the feature:
- in the case of at least some of the guiding screens (163), their perpendicular plane of symmetry has an orientation comprising at least one tangential component with regard to the receptacle.

## Revendications

1. Procédé pour traiter du mout de bière comprenant les étapes de procédé suivantes :
- on prend le mout de bière, séparément quant aux propriétés, en au moins deux quantités partielles,
- on reçoit les différentes quantités partielles de mout de bière dans une cuve (33) commune, à communication dans des volumes partiels (34) de la cuve (33), volumes partiels superposés à la manière d'une tour, ces volumes partiels étant largement séparés l'un de l'autre par un fond de séparation (35) muni d'orifices de passage (36), et
- on traite ces quantités partielles séparément les unes des autres.

2. Procédé selon la revendication 1,
comprenant les étapes de procédé suivantes :
- en prélevant le mout de bière du dispositif de clarification (30), on fait passer le mout de bière dans un récipient de compensation (47) dont la capacité est inférieure à la quantité partielle prévue,
- à partir du récipient de compensation (47) on conduit le mout de bière suivant différentes quantités partielles dans le volume partiel associé (34) de la cuve commune (33).

3. Procédé selon la revendication 1,
comprenant les étapes de procédé suivantes :
- avant ou après avoir conduit les différentes quantités partielles dans le volume partiel associé (34) de la cuve commune (33) on ajoute des additifs aux différentes quantités partielles,
- le dosage des additifs dépend des propriétés des différentes quantités partielles.

4. Procédé selon l'une des revendications 1 ou 2,
comprenant les étapes de procédé suivantes :
- avant d'introduire les différentes quantités partielles dans le volume partiel associé (34) de la cuve commune (33) on soumet les différentes quantités partielles, séparément l'une de l'autre à un chauffage à une température au moins voisine de la température d'ébullition, de préférence dans une plage de températures comprise entre 100° C jusqu'à 120° C,
- il se produit alors l'évaporation dans le système de chauffage (81),
- les quantités partielles sont soumises à une post-évaporation,
- la post-évaporation est effectuée à une pression qui est égale au maximum est égale à la pression de l'endroit où la quantité partielle est introduite.

5. Procédé selon les revendications 1, 2 ou 3,
comprenant les étapes de procédé suivantes :
- avant d'introduire les différentes quantités partielles dans le volume partiel (34) associé dans la cuve commune (33), on soumet séparément les différentes quantités partielles à un chauffage à une température de maintien à chaud, de préférence dans la plage des températures comprise entre 100° C et 120° C,
- directement ensuite on refroidit les différentes quantités partielles, de préférence au moins au voisinage de la température d'ébullition à la pression atmosphérique,
- on soumet les quantités partielles à une post-évaporation, et
- on effectue la post-évaporation à une pression qui au plus est égale à la pression à l'endroit correspondant là où est renvoyée la quantité partielle.

6. Procédé selon l'une des revendications 1 à 5, comprenant les étapes de procédé suivantes :
- on prélève les différentes quantités partielles dans les différents volumes partiels (34) de la cuve (33), selon une fraction de volume très faible pour une étape de traitement du mout de bière et après le traitement on renvoi ce volume partiel dans la chambre partielle (34) associée,
- pour la sélection de l'emplacement du prélèvement et la reconduite de la fraction de volume, on tient compte des variations de densité produites lors du traitement de la fraction de volume.

7. Procédé selon la revendication 6,
comprenant l'étape de procédé suivante :
- la fraction de volume mise en circulation est soumise à une opération de cuisson avec une évaporation par détente et ensuite à une post-évaporation.

8. Procédé selon la revendication 6,
comprenant l'étape de procédé suivante :
- la fraction de volume mise en circulation est soumise à une évaporation sous vide.

9. Procédé selon la revendication 6,
comprenant l'étape de procédé suivante :
- la fraction de volume mise en circulation est soumise à une opération de cuisson sous la forme d'une évaporation en film mince et ensuite à une post-évaporation.

10. Procédé selon la revendication 7 ou 8,
comprenant l'étape de procédé suivante :
- on exécute la post-évaporation sous une pression qui est au plus égale à la pression à l'endroit correspondant où est reconduite la fraction de volume.

11. Procédé selon la revendication 1, 2, 3 ou 5,
comprenant les étapes de procédé suivante :
- on prélève des différentes quantités partielles dans les différents volumes partiels (34) de la cuve (33), l'une des quantités partielles au moins sensiblement complètement, et on traite selon le plan de traitement,
- après ce traitement on ne reconduit pas cette quantité partielle dans la cuve (33) mais on la soumet à d'autres traitements selon le plan de traitement.

12. Procédé selon la revendication 11,
comprenant les étapes de procédé suivante :
- on soumet la quantité partielle prélevée, séparément des autres quantités partielles à une élévation de température au moins sensiblement à la température d'ébullition, de préférence dans une plage de températures comprise entre 100° C et 120° C, et
- on effectue ensuite l'évaporation dans le système de chauffage.

13. Procédé selon l'une des revendications 1 à 12,
comprenant l'étape de procédé suivante :
- à la fin des étapes de traitement qui nécessitent un réchauffage du mout de bière, on refroidit certaines quantités partielles ou toutes les quantités partielles à une température qui se situe dans une plage de températures comprise entre 85° C et 100° C.

14. Procédé selon l'une des revendications 1 à 13,
comprenant l'étape de procédé suivante :
- pour certaines ou toutes les quantités partielles on sépare la partie trouble chaude par une séparation, de clarification externe (63 ; 109 ; 110).

15. Procédé selon l'une des revendications 1 à 14,
comprenant l'étape de procédé suivante :
- au moins certaines quantités partielles sont soumises à une évaporation sous vide, de préférence à la fin de toutes les autres étapes de traitement.

16. Procédé selon l'une des revendications 1 à 14,
comprenant l'étape de procédé suivante :
- on soumet au moins certaines quantités partielles à une évaporation en film mince.

17. Procédé selon l'une des revendications 1 à 14,
comprenant l'étape de procédé suivante :
- à l'aide d'un milieu gazeux remontant, à contre-courant libre, on enlève d'au moins certaines quantités partielles les constituants volatiles et de préférence également de l'eau,
- on utilise le milieu gazeux à une température,
- inférieure à la température de la quantité partielle, en utilisant de préférence de l'air atmosphérique comme agent, ou
- si cette température est au moins sensiblement égale à la température de la quantité partielle, on utilise de préférence comme agent de l'air atmosphérique ou de la vapeur saturée, ou
- si la température est supérieure à la température de la quantité partielle, on utilise de préférence un agent constitué par de la vapeur chaude.

18. Procédé selon l'une des revendications 1 à 17,
comprenant l'étape de procédé suivante :
- on refroidit au moins une partie des quantités partielles, séparément des autres à au moins une température voisine de la température d'application et ensuite on congèle ou on laisse mûrir séparément.

19. Procédé selon la revendication 7 ou 9,
comprenant l'étape de procédé suivante :
- à la fin d'une durée de cuisson prédéfinie, on interrompt l'apport en énergie de l'opération de cuisson et on laisse la quantité partielle ou la fraction de volume dans une phase d'évaporation.

20. Dispositif pour la mise en oeuvre du procédé selon la revendication 1,
comportant les caractéristiques suivantes :
il est prévu une cuve (33) formée par,
- une paroi périphérique (72),
- un fond (73),
- un couvercle (74),
- le couvercle (74) comporte un orifice d'alimentation en air et d'évacuation d'air (75) qui peut être fermé de manière sélective
- la cuve (33) comporte au moins un fond intermédiaire (35) avec au moins un orifice de passage (36) par lequel le volume intérieur de la cuve (33) est subdivisé en deux volumes partiels (34),
- la cuve (33) comporte pour chaque volume partiel (34) au moins une conduite d'alimentation (76, 78) et au moins une conduite de sortie (79).

21. Dispositif selon la revendication 20,
comportant la caractéristique suivante :
- la paroi périphérique (72) de la cuve (33) est en forme de cylindre droit de section circulaire.

22. Dispositif selon la revendication 20 ou 21,
comportant les caractéristiques suivantes :
- le fond intermédiaire (35) est formé par une plaque reliée de manière étanche à la paroi périphérique (72), et
- le fond intermédiaire (35) comporte au moins un orifice de passage (36).

23. Dispositif selon la revendication 20 ou 21,
comportant les caractéristiques suivantes :
- le fond intermédiaire (121) est formé par deux plaques (122, 123),
- ces plaques étant reliées de manière étanche au niveau de la paroi périphérique (72), et
- ces plaques sont installées à une distance réciproque l'une de l'autre
- chacune des deux plaques (122, 123) comporte au moins un orifice traversant (124, 125), et
- l'orifice traversant (124) d'une plaque (122) est décalé par rapport à l'orifice traversant (125) de l'autre plaque (123).

24. Dispositif selon l'une des revendications 21 à 23,
comportant les caractéristiques suivantes :
dans un volume partiel,
- un dispositif de répartition (141) est raccordé à la conduite d'alimentation (78) et de préférence,
- un dispositif collecteur (142) est relié à la conduite d'évacuation (79).

25. Dispositif selon la revendication 24,
comportant les caractéristiques suivantes :
- le dispositif de répartition (141) est formé par au moins un tube répartiteur (143) fermé, de forme annulaire (répartiteur annulaire) aligné parallèlement au fond intermédiaire (121),
- le répartiteur annulaire (143) comporte sur le côté extérieur de l'anneau et de préférence également sur le côté intérieur de l'anneau, un nombre d'orifices de sortie (145) répartis de préférence régulièrement à la périphérie annulaire,
- au moins une partie des orifices de sortie (145) dont les axes se situent dans un plan commun sont alignés dans le plan annulaire, et/ou
- au moins pour une partie des orifices de sortie (145) dont l'axe est parallèle à la surface enveloppe d'un cône dont l'axe du cône est aligné sur l'axe annulaire du distributeur annulaire (145).

26. Dispositif selon la revendication 24,
comportant les caractéristiques suivantes :
- le dispositif collecteur (142) est formé par au moins un tube collecteur (144) fermé en anneau (collecteur annulaire) aligné parallèlement au fond intermédiaire (121),
- le collecteur annulaire (144) comporte sur son côté annulaire extérieur et de préférence également sur le côté annulaire intérieur, un certain nombre d'orifices d'entrée (146) répartis de préférence régulièrement à la périphérie de l'anneau,
- au moins une partie des orifices d'entrée (146), à son axe situé dans un plan commun aligné avec le plan annulaire et/ ou,
- au moins une partie des orifices d'entrée (146) à son axe parallèle à la génératrice d'un cône dont l'axe est aligné sur l'axe du collecteur annulaire (144).

27. Dispositif selon la revendication 25 ou 26,
comportant la caractéristique suivante :
- pour de l'alignement de l'axe des orifices de sortie (145) et/ou des orifices d'entrée (146) parallèlement à une génératrice du cône, cet axe est tourné vers le fond intermédiaire (121) voisin.

28. Dispositif selon la revendication 25 ou 26,
comportant les caractéristiques suivantes :
le dispositif répartiteur (151) et/ou dispositif collecteur (152) sont formés par un certain nombre de segments de tubes (153, 154) (tubes de sortie, tubes collecteurs), dont
- une extrémité est reliée à la conduite d'alimentation (78) ou à la conduite de sortie (79), et
- l'autre extrémité débouche librement dans le volume partiel (34).

29. Dispositif selon la revendication 28,
comportant les caractéristiques suivantes :
- chaque fois deux tuyaux de sortie (153) ou tuyaux collecteurs (154) sont réunis l'un à l'autre pour former un arceau tubulaire (155) ayant un tracé en forme de U,
- au sommet de la forme en U on a un point de raccordement commun (156) où se situe la conduite d'alimentation (78) ou la conduite de sortie (79).

30. Dispositif selon la revendication 28 ou 29,
comportant la caractéristique suivante :
- l'embouchure (159) d'au moins une partie du tuyau de sortie (153) et/ou du tuyau collecteur (154) est aligné au moins sensiblement parallèlement à l'axe du réceptacle (33).

31. Dispositif selon la revendication 28 ou 29,
comportant les caractéristiques suivantes :
- le tuyau de sortie (153) et/ou tuyau collecteur (154) ainsi que le raccordement à la conduite d'alimentation (78) ou à la conduite de sortie (79) sont prévus sur le côté arrière du fond intermédiaire (128) associé,
- le segment d'extrémité des tuyaux de sortie (153) et/ou de ces tuyaux collecteurs (154) est rendu étanche par un orifice de passage accordé de manière correspondant dans le fond intermédiaire (126) en traversant celui-ci et en étant rendu de préférence étanche vis-à-vis du fond intermédiaire (126),
- l'embouchure (159) de ce segment d'extrémité est de préférence à niveau avec le côté avant du fond intermédiaire (126).

32. Dispositif selon la revendication 31,
comportant la caractéristique suivante :
- les segments d'extrémité des tuyaux de sortie (153) et des tuyaux collecteurs (154) sont décalés.

33. Dispositif selon la revendication 28 ou 32,
comportant les caractéristiques suivantes :
- au moins pour une partie des tuyaux de sortie (153), dans la ligne d'alignement de l'embouchure (159) on a à chaque fois une plaque brise-jet (161) à une distance prédéfinie en avant de l'embouchure (159), et
- la plaque brise-jet (161) a de préférence une forme circulaire.

34. Dispositif selon la revendication 33,
comportant la caractéristique suivante :
au moins une partie des plaques brise-jet (161) comporte un écran de guidage (163),
- qui s'étend en forme d'arc le long du bord de la plaque brise-jet (161) sur un segment périphérique prédéfini de la plaque brise-jet (161) et
- sa hauteur est au moins sensiblement égale à la distance entre la plaque brise-jet (161) et le fond intermédiaire (126).

35. Dispositif selon la revendication 32,
comportant la caractéristique suivante :
- le plan de symétrie verticale d'au moins une partie des écrans directeurs (163), est aligné pour englober au moins une composante tangentielle par rapport à la cuve.
